# EUROPÄISCHE PATENTSCHRIFT

(11) **EP 0 878 339 B1**
(45) Veröffentlichungstag und Bekanntmachung des Hinweises auf die Patenterteilung: **05.03.2003**
(21) Anmeldenummer: 98108886.7
(22) Anmeldetag: 15.05.1998
(51) Int. Cl.: B60K 6/04

(54) **Verfahren zur Reduzierung des Kraftstoffverbrauches in einem Antriebssystem für Fahrzeuge und Hybridantriebssystem**
Method for reducing fuel consumption of a vehicle drive system, and hybrid drive system
Procédé pour diminuer la consommation en carburant d'un véhicule, et chaine de transmission hybride

(30) Priorität: 16.05.1997 DE 19720817
(43) Veröffentlichungstag der Anmeldung: 18.11.1998
(73) Patentinhaber: Voith Turbo GmbH & Co. KG, 89522 Heidenheim (DE)
(72) Erfinder: Müller, Robet, Dr., 89407 Dillingen (DE); Lange, Andreas, 89551 Zang (DE); Dietzel, Bernd, 89428 Syrgenstein (DE)
(74) Vertreter: Dr. Weitzel & Partner

(56) Entgegenhaltungen:
- US-A- 5 517 092
- US-A- 5 627 752

## Beschreibung

Die Erfindung betrifft ein Verfahren zur Reduzierung des Kraftstoffverbrauches in einem Antriebssystem für Fahrzeuge, insbesondere für den Einsatz in Bussen; ferner ein Antriebssystem zur Durchführung des Verfahrens.

Eine Einrichtung nach dem Oberbegriff des Anspruchs 3 ist aus der US 5517 092 bekannt.

Aus dem Sonderdruck G 1407 der J. M. Voith GmbH ist ein dieselelektrisches Antriebssystem für Nutzfahrzeuge, insbesondere für Stadtbusse, bekannt. Dieses umfaßt mindestens einen mit einem Antriebsrad verbundenen Elektromotor, welcher vorzugsweise als Transversalflußmaschine ausgeführt ist, der jeweils von einer Wechselrichtereinheit mit elektrischer Leistung versorgt wird. Des weiteren ist ein Generator vorgesehen, welcher ebenfalls vorzugsweise als Transversalflußmaschine ausgeführt sein kann, und der mechanisch mit einem Verbrennungsmotor, insbesondere einem Dieselmotor, koppelbar ist. Zur Erzeugung der elektrischen Leistung wird der Generator durch einen Vierquadrantenwechselrichter angesteuert. Für die Vorgabe der Sollwerte der Radmotoren (Drehmoment) sowie der Drehzahlsteuerung des Dieselmotors ist eine übergeordnete Fahrsteuerung vorgesehen, welche u.a. in der Lage ist, den Fahrerwunsch auszuwerten.

Die Wechselrichter für den oder auch die Radmotoren und den Generator sind über einen Wechselrichterzwischenkreis miteinander gekoppelt. Hierbei besteht auch die Möglichkeit, die Wechselrichter zu einer einheitlichen Baugruppe zusammenzufassen.

Die Energieversorgung der Radmotoren erfolgt in dieser dieselelektrischen Ausführung über den Dieselmotor-Generatorsatz. Des weiteren ist für hybride Antriebssysteme die Systemerweiterung durch das Vorsehen einer Batterie oder einer Schnittstelle zu einer Oberleitung möglich.

Vorteil eines derartigen Antriebskonzeptes ist der Entfall einer mechanischen Kopplung zwischen dem Dieselmotor und den Antriebsrädern, woraus sich die Möglichkeit des Einsatzes in Niederflurfahrzeugen ergibt. Gegenüber einem konventionellen Antriebsstrang sind sowohl die Fahrgeschwindigkeit und die Dieselmotordrehzahl als auch Zugkraft und Dieselmotormoment entkoppelt; einzige Randbedingung für den Arbeitspunkt des Dieselmotors ist die geforderte Leistung. Entsprechend den derzeitigen Entwicklungstendenzen im Fahrzeugbau, die auf ein größeres Raumangebot, mehr Komfort, ein besseres Beschleunigungs- und Verzögerungsverhalten aus Gründen der Sicherheit bei allen Fahrzuständen sowie im Hinblick auf den Umweltschutz auf eine verringerte Schadstoff - insbesondere CO₂-Emission - hinzielen, ist auf eine Verringerung des Kraftstoffverbrauches abzustellen.

Der Erfindung liegt deshalb die Aufgabe zugrunde, ein Antriebssystem bzw. ein Verfahren zur Kraftstoffverbrauchsreduzierung in einem Antriebssystem der eingangs genannten Art derart weiterzuentwickeln, daß die gestellten Anforderungen mit möglichst geringem konstruktiven und steuerungstechnischen Aufwand erzielt werden. Dabei soll das Antriebssystem sich durch einen möglichst einfachen Aufbau auszeichnen und die Verwendung teurer Energiespeicher vermieden werden. Des weiteren wird angestrebt, daß an den einzelnen bekannten Komponenten des Antriebssystems keine größeren Veränderungen vorgenommen werden müssen.

Die erfindungsgemäße Lösung der Aufgabe ist durch die Merkmale der Ansprüche 1 und 3 gekennzeichnet. Vorteilhafte Ausgestaltungen sind in den Unteransprüchen wiedergegeben.

Bei Fahrzeugen, insbesondere Nutzkraftwagen, mit einem Antriebssystem, welches wenigstens einen, mit einem Antriebsrad wenigstens mittelbar koppelbaren Elektromotor, eine mechanisch mit einer Antriebsmaschine, insbesondere einer Verbrennungskraftmaschine mechanisch koppelbaren und im Traktionsbetrieb als Generator betreibbaren elektrischen Maschine, wobei jeder Elektromotor elektronisch mit der elektrischen Maschine über eine elektrische Kopplung verbunden ist, wird während des Betriebes des Fahrzeuges wenigstens eine, den aktuellen Bewegungs- und/oder Fahrzustand des Fahrzeuges wenigstens mittelbar charakterisierende Größe fortlaufend erfaßt und ausgewertet. Ergibt die Auswertung der den Fahrzustand charakterisierenden Größen, daß diese zu einem Stillstand des Fahrzeuges führen, erfolgt automatisch eine Abschaltung der Verbrennungskraftmaschine, insbesondere des Dieselmotors. Dabei kann es sich vorzugsweise um eine Reduzierung bzw. Abstellung der Kraftstoffzufuhr bzw. eine Beeinflussung des Leistungsstellgliedes der Verbrennungskraftmaschine derart handeln, daß diese keine Antriebsleistung erzeugt. Es besteht jedoch auch die Möglichkeit die Verbrennungskraftmaschine vom Antriebsstrang entkoppelbar zu machen. Erfindungsgemäß erfolgt wenigstens im sogenannten Start/Stop-Betrieb der Anlaß- bzw. Startvorgang der Verbrennungskraftmaschine, insbesondere des Dieselmotors, durch die im normalen Traktionsbetrieb als Generator betreibbare elektrische Maschine bei einer bestimmten festlegbaren Drehzahl. Für diesen Zweck wird die der elektrischen Kopplung zugeordnete Energiespeichereinrichtung, welche vorzugsweise als Batterie ausgeführt ist, mit einer wesentlich geringeren Spannung U_{BATT} << U_{EK} (Zwischenkreispannung) direkt mit der Zwischenkopplung verbunden und nach dem Start bzw. Anlaßvorgang wieder von der elektrischen Kopplung getrennt. Das Laden der Energiespeichereinrichtung, vorzugsweise der Batterie, erfolgt ebenfalls über die elektrische Kopplung.

Die erfindungsgemäße Lösung ermöglicht es, eine separate Start- bzw. Anlaßvorrichtung für die Verbrennungskraftmaschine einzusparen sowie durch geringfügigen Aufwand, dem Vorsehen einer kleinen Energiespeichereinrichtung in Form einer Batterie in Kombination mit der als Generator im Traktionsbetrieb betreibbaren elektrischen Maschine einen Anlaßvorgang ohne zusätzliche separate Elemente aufgrund der gespeicherten Energie einzuleiten.

Der Kraftstoffverbrauch wird damit durch die automatische Abschaltung der Verbrennungskraftmaschine bei Hinweis auf einen kommenden Stillstand des Fahrzeuges unter Ausnutzung der im Fahrzeug noch vorhandenen Energie wesentlich verringert.

Als die den Bewegungs- und/oder Fahrzustand des Fahrzeuges wenigstens mittelbar charakterisierenden Größen können beispielsweise die aktuelle Fahrgeschwindigkeit, die Gaspedalstellung, Schaltpositionen des Tastenschalters, die Türbetätigung des Fahrzeuges, die Geschwindigkeit der Freigabe des Gaspedals sowie die Geschwindigkeit bzw. die Art und Weise der Bremsbetätigung fungieren. Theoretisch ist es denkbar, lediglich nur eine den Fahrzustand charakterisierende Größe zu ermitteln. Vorzugsweise werden jedoch wenigstens zwei Signale für die den Fahrzustand charakterisierenden Größen ausgewertet, wobei Zusammenhänge zwischen beiden Signalen Berücksichtigung finden können. Ein Beispiel dafür ist die Auswertung der Geschwindigkeit, mit welcher der Fahrer das Gaspedal- bzw. den Gashebel freigibt bei Berücksichtigung der Art und Geschwindigkeit der gleichzeitig oder folgenden Bremsbetätigung.

Vorrichtungsmäßig ist dem Antriebssystem, welches mindestens einen, mit wenigstens einem Antriebsrad wenigstens mittelbar koppelbaren Elektromotor, eine mechanisch mit einer Verbrennungskraftmaschine koppelbare und im Traktionsbetrieb als Generator betreibbare elektrische Maschine mit einer elektrischen Kopplung zwischen den Elektromotoren und der als Generator betreibbarer elektrischen Maschine, jeweils eine mit einem Elektromotor koppelbare Wechselrichtereinheit und eine dem Generator zugeordnete weitere Wechselrichtereinheit, wobei die Wechselrichtereinheiten von Elektromotoren und Generator über einen Spannungszwischenkreis miteinander gekoppelt sind, umfaßt, eine Energiespeichereinrichtung in Form einer Batterie zugeordnet. Diese Energiespeichereinrichtung, insbesondere die Batterie, ist über entsprechende Mittel, zur Realisierung der einzelnen Funktionen an den Spannungszwischenkreis koppelbar. Dazu werden wenigstens ein Element zur Reduzierung der Zwischenkreisspannung U_{EK} auf U_{Batt} sowie ein Schaltelement zum wahlweisen Trennen und Verbinden der Energiespeichereinrichtung mit dem Zwischenkreis vorgesehen.

Die Ankoppelung der Energiespeichereinrichtung an den Spannungszwischenkreis kann beispielsweise über ein Gleichrichterelement in Form eines Thyristors erfolgen. Das Zünden des Thyristors erfolgt über die Fahrsteuerung. Die Löschung erfolgt automatisch, wenn die Zwischenkreisspannung die Batteriespannung überschreitet.

Die Ladung der Batterie kann aus dem Zwischenkreis mit einer einfachen Chopperlösung zur Reduzierung der Zwischenkreisspannung auf die Ladespannung der Batterie erfolgen.

Des weiteren ist dem Antriebssystem eine Steuervorrichtung zugeordnet, welche wenigstens eine Steuereinrichtung umfaßt, die wenigstens einen ersten Eingang und wenigstens einen ersten und einen zweiten Ausgang aufweist. Der erste Eingang ist wenigstens mittelbar mit einer Erfassungseinrichtung für eine den aktuellen Fahrzustand wenigstens mittelbar charakterisierende Größe verbunden. Diese Erfassungseinrichtung kann beispielsweise in Form eines Sensors ausgeführt werden und entsprechend der Art der zu ermittelnden Größe an entsprechender Stelle im Fahrzeug angeordnet werden. Denkbar ist beispielsweise eine Anordnung des Sensors im Bereich der anzutreibenden Räder zur Erfassung der aktuellen Fahrgeschwindigkeit. Eine andere Möglichkeit besteht darin, den Sensor im Bereich des Gashebels bzw. Gaspedals anzuordnen, um die Geschwindigkeit der Freigabe bzw. Verstellung dessen zu ermitteln. Des weiteren ist es denkbar, als Erfassungseinrichtung eine Einrichtung zu verwenden, die eine Größe, welche den Stillstand des Fahrzeuges anzeigt bzw. eine Anfahrmöglichkeit signalisiert. Denkbar ist hierbei die Erfassung des Signals zur Türbetätigung in Bussen. Eine weitere Möglichkeit besteht darin, festzustellen, wo sich das Fahrzeug befindet, um aufgrund der Erfahrungen im Dauerbetrieb eine vorausschauende Abstellung der Verbrennungskraftmaschine, insbesondere des Dieselmotors zu bewirken. Auch ermöglicht die moderne Nachrichtentechnik mittels Telematik über einen Verkehrsleitrechner die Erfassung einer Information über die aktuelle Verkehrsdichte und eventuelle Staumöglichkeiten. Denkbar ist auch die Erfassung mehrerer den aktuellen Fahr- und Bewegungszustand charakterisierenden Größen. Dem entsprechend viele Eingänge sind vorzusehen.

Die Erfassungseinrichtung ist mit dem ersten Eingang, bzw. die Erfassungseinrichtungen sind jeweils mit einem Eingang der Steuereinrichtung gekoppelt. In der Steuereinrichtung erfolgt eine Auswertung hinsichtlich des zu erwartenden Fahrzustandes, wobei im Hinblick auf einen Stillstand des Fahrzeuges am Ausgang der Steuereinrichtung eine Stellgröße ausgegeben wird, welche auf das Leistungsstellglied der Verbrennungskraftmaschine dahingehend wirkt, daß die Verbrennungskraftmaschine zum Stillstand gebracht wird.

Zur erneuten Inbetriebnahme des Antriebssystems muß die Verbrennungskraftmaschine wieder gestartet werden. Dies erfolgt nach Stillstandszeiten durch Nutzung der im normalen Traktionsbetrieb als Generator betreibbaren elektrischen Maschine als Anlaß- bzw. Startvorrichtung. Die Verwendung der als Generator betreibbaren elektrischen Maschine zum Anlaß- bzw. Startvorgang bietet den Vorteil, daß diese für entsprechend hohe Belastungen ausgelegt ist, während die Verwendung eines konventionellen Anlassers bezüglich der Lebensdauer für derartige Dauerbelastungen aus einem start-Stop-Betrieb mit einer hohen Anzahl von Startvorgängen nicht ausgelegt ist.

Die Inbetriebnahme des Antriebssystems erfolgt durch Ansteuerung eines Mittels zur Unterbrechung der Kopplung zwischen der Energiespeichereinrichtung und der elektrischen Kopplung zwischen den Elektromotoren und der als Generator betreibbaren elektrischen Maschine. Zu diesem Zweck ist der zweite Ausgang mit den Mitteln zur Kopplung bzw. Entkopplung der Energiespeichereinrichtung mit der elektrischen Kopplung von Elektromotoren und elektrischer Maschine, verbunden. Die Auslösung, d.h. das erneute Anfahren wird durch ein Signal über die Fahrsteuerung realisiert. Die Mittel zur Kopplung der Energiespeichereinrichtung, insbesondere der Batterie, mit der Kopplung zwischen den Elektromotoren und der elektrischen Maschine sind dabei vorzugsweise als Schalteinrichtung ausgeführt. Die als Zwischenkreis ausgeführte elektrische Kopplung weist dabei eine Spannung U_{BATT} auf. Über den Zwischenkreis wird dabei durch entsprechende Ansteuerung der Wechselrichtereinheiten die elektrische Maschine als Motor zum Antrieb bzw. Starten der Verbrennungskraftmaschine betrieben. Hat die Verbrennungskraftmaschine die entsprechende Drehzahl erreicht, erfolgt eine Trennung der Energiespeichereinrichtung, insbesondere der Batterie, über die Schalteinrichtung von der als Zwischenkeis ausgeführten elektrischen Kopplung. Daß allein die als Generator im Traktionsbetrieb betreibbare elektrische Maschine von der Energiespeichereinrichtung angetrieben wird, kann entweder durch Ansteuerung der einzelnen Wechselrichterelemente im Spannungszwischenkreis, d.h. der elektrischen Kopplung, oder über entsprechende Stromrichtereinheiten, welche lediglich bei bestehender Kopplung zwischen der Energiespeichereinrichtung und dem Zwischenkreis aktiviert werden, realisiert werden. Die konkrete Ausführung liegt dabei im Ermessen des Fachmannes.

Bei Inbetriebnahme des Antriebssystems erfolgt ein Zünden des Thyristors über die Fahrsteuerung. Die Außerbetriebnahme des Thyristors erfolgt automatisch, wenn die Spannung im Wechselrichterzwischenkreis die Batteriespannung überschreitet.

Die erfindungsgemäße Lösung ermöglicht es, eine einfache kostengünstige Start- und Stopeinrichtung mit großer Lebensdauer für das Antriebssystem zu realisieren, wobei aufgrund der Abstellung der Verbrennungskraftmaschine über einem erheblichen Zeitraum bezogen auf den Gesamtbetrieb im Stadtverkehr, eine enorme Einsparung an Kraftstoff trotz des ständigen Stopand-Go-Verkehrs erzielt wird. Die Erfinder haben nämlich erkannt, daß sich insbesondere im Innenstadtbereich die Stillstandszeit des Fahrzeuges, insbesondere des Busses auf 20 % bis zu einem Drittel der Gesamtfahrzeit erstreckt. Der Verbrauch im Leerlauf der Verbrennungskraftmaschine schlägt dabei mit ca. 15 % des Gesamtverbrauches zu Buche. Dieses mögliche Einsparpotential kann mit einem Antriebssystem der eingangs genannten Art bei Abschaltung des Verbrennungsmotors zum größten Teil ausgenutzt werden.

Die Steuervorrichtung kann dabei Bestandteil der Fahrsteuerung sein. Eine separate Steuervorrichtung, welche über die Fahrsteuerung angesteuert wird, ist ebenfalls denkbar.

Die Ladung der Energiespeichereinrichtung, insbesondere der Batterie kann aus dem Spannungszwischenkreis mit einer einfachen Chopperlösung zur Reduzierung der Zwischenkreisspannung auf die Ladespannung der Batterie erfolgen. Die Ladung erfolgt dabei in Abhängigkeit vom Ladezustand der Batterie. Der Ladevorgang erfolgt dabei vorzugsweise nur im Betriebszustand Bremsen.

Der Ladevorgang kann ebenfalls mittels der Steuervorrichtung bzw. der Fahrsteuerung realisiert werden. Dazu ist es erforderlich, daß der Ladezustand vorerst ermittelt wird und ein Signal für den aktuellen Ladezustand der Batterie der Steuervorrichtung zugeführt wird. Bei einem auftretenden Bremsvorgang, wobei ein Signal für die Bremsbetätigung am Eingang der Steuereinrichtung anliegt, wird in Abhängigkeit vom Ladezustand der Batterie entschieden, ob über den Generator Energie in den Spannungszwischenkreis und damit dann der Batterie zugeführt wird oder nicht.

Eine andere Möglichkeit besteht darin, generell Energie in den Spannungszwischenkreis einzuspeisen, und den aktuellen Spannungswert des Spannungszwischenkreises ständig zu überwachen und bei Überschreitung eines bestimmten, für den Bremsvorgang charakteristischen Wertes, am Eingang der Steuereinrichtung ein Signal entweder für die Größe des ermittelten Spannungswertes oder ein allgemeines Signal im Hinblick auf das Vorliegen eines Bremsvorganges anzulegen.

Ein weiteres Problem, welches sich beim Abstellen der Verbrennungskraftmaschine bzw. bei stehendem Verbrennungsmotor ergibt, besteht darin, daß die Lenkhilfeunterstützung, insbesondere die Lenkhilfepumpe, nicht mehr angetrieben wird. Dies würde bedeuten, daß im Hinblick auf einen beabsichtigten Stillstand des Fahrzeuges eine Abstellung des Verbrennungsmotors nicht bereits vorher erfolgen kann, sondern erst bei tatsächlichem Fahrzeugstillstand möglich wird. Dies bedeutet aber, daß die Trägheit des Fahrzeuges im Hinblick auf den Bremsvorgang vom Einleiten des Bremsvorganges bis zum Stillstand nicht ausgenutzt werden kann.

In diesem Fall wird die Möglichkeit, das an den Rädern des Fahrzeuges wirkende Fahrmoment über die im Betriebszustand "Bremsen" als Generator betreibbaren Elektromotoren zum Antrieb der im Traktionsbetrieb als Generator betreibbaren elektrischen Maschine zu nutzen, welche wiederum mit den entsprechenden Nebenaggregaten, d.h. auch der Lenkhilfepumpe wenigstens mittelbar koppelbar ist, und diese antreibt. Somit wird erreicht, daß bei Abstellung der Verbrennungskraftmaschine im Betriebszustand "Bremsen" auch bei abgestellter Verbrennungskraftmaschine die Lenkhilfepumpe von der im Traktionsbetrieb als Generator betreibbaren elektrischen Maschine weiter angetrieben wird und ein Ausrollen des Fahrzeuges ohne Beeinträchtigung der Lenkfunktion möglich wird.

Es besteht auch die Möglichkeit, die Verbrennungskraftmaschine trotz Abstellung der Kraftstoffzufuhr über die im Traktionsbetrieb als Generator betreibbare elektrische Maschine zu schleppen und darüber die Lenkhilfepumpe anzutreiben.

Eine Beeinträchtigung des Fahrgefühls für den Fahrer ist daher nicht zu befürchten. Insbesondere kann hier bereits Kraftstoff eingespart werden.

Die erfindungsgemäße Lösung der Aufgabe ist nachfolgend anhand einer Figur erläutert. In dieser ist schematisch eine Ausführung eines erfindungsgemäß gestalteten Antriebssystems 1 dargestellt. Das Antriebssystem 1 umfaßt mindestens einen mit wenigstens einem Antriebsrad 2 wenigstens mittelbar koppelbaren Elektromotor 3, welcher vorzugsweise als Transversalflußmaschine ausgeführt ist. Jeder Elektromotor 3 wird jeweils von einer Wechselrichtereinheit 4 mit elektrischer Leistung versorgt. Des weiteren ist eine im Traktionsbetrieb, d.h. im Betriebszustand "Fahren" als Generator betreibbare elektrische Maschine 5, nachfolgend Generator 5 genannt, vorgesehen, welche ebenfalls vorzugsweise als Transversalflußmaschine ausgeführt ist und die mechanisch mit einer Verbrennungskraftmaschine 6 koppelbar ist. Zur Erzeugung der elektrischen Leistung wird der Generator 5 durch eine Wechselrichtereinheit, vorzugsweise einen Vierquadrantenwechselrichter 7 angesteuert.

Die Wechselrichtereinheiten 4 und 7 für die mit den Antriebsrädern verbundenen Elektromotoren 3 und den Generator 5 sind über einen Spannungszwischenkreis 8 miteinander gekoppelt. Der Spannungszwischenkreis ist über eine Schalteinrichtung 9 mit einer Energiespeichereinrichtung 10 in Form einer Batterie koppelbar. Des weiteren ist eine Spannungsrichtereinheit 30 vorgesehen, welche in der Verbindung zwischen dem Spannungszwischenkreis 8 und der Energiespeichereinrichtung 10 angeordnet ist. Diese Verbindung wird mit 31 bezeichnet.

Der Antriebseinrichtung 1 ist eine Steuervorrichtung 11 zugeordnet, welche wenigstens eine Steuereinrichtung 12 umfaßt. Die Steuereinrichtung 12 weist wenigstens einen ersten Eingang 13 und einen ersten Ausgang 14 auf. Vorzugsweise sind der Steuereinrichtung 12 eine Vielzahl von Eingängen zugeordnet, im dargestellten Fall die Eingänge 15 und 16. Diese Eingänge sind mit Erfassungseinrichtungen, hier den Erfassungseinrichtungen 17, 18 und 19, gekoppelt, die der Ermittlung einer den Fahrzustand charakterisierenden Größe ermöglichen. Die Erfassungseinrichtungen 17 bis 19 sind dabei beispielsweise als Sensoren ausgeführt. Die Erfassungseinrichtung 17 kann dabei den Antriebsrädern 2 zugeordnet sein, und die Drehzahl der Antriebsräder als proportionale Größe zur aktuellen Fahrgeschwindigkeit, erfassen. Die Erfassungseinrichtung 18 ist beispielsweise dem Betätigungspedal für die Bremseinrichtung zugeordnet und dient der Erfassung der Geschwindigkeit bzw. der Intensität der Betätigung des Bremspedals. Die Erfassungseinrichtung 19 ist beispielsweise dem Gashebel bzw. dem Gaspedal zugeordnet und dient der Erfassung der Geschwindigkeit, mit welcher der Fahrer den Gashebel bzw. das Gaspedal freigibt. Diese Signale werden den Eingängen 13, 15 und 16 der Steuereinrichtung zugeführt. Die Steuereinrichtung 12 umfaßt eine Einrichtung zur Auswertung der den Fahrzustand charakterisierenden Größen, wobei im Hinblick auf einen zu erzielenden Stillstand des Fahrzeuges eine Stellgröße am Ausgang 14 gebildet wird, welche am Leistungsstellglied der Verbrennungskraftmaschine 6, d.h. des Dieselmotors, wirksam wird. Diese Auswertung kann beispielsweise mittels Algorithmen oder aber durch Vergleiche mit abgespeicherten oder abspeicherbaren, ständig aktualisierbaren Kennwerten oder Kennfeldern erfolgen.

Eine andere Möglichkeit, welche hier nicht dargestellt ist, besteht darin, in der Steuereinrichtung einen elektronischen Stadtplan zu hinterlegen, mittels welchem ständig nachvollzogen werden kann, wo sich das Fahrzeug gerade befindet, um aufgrund dauerhafter Erfahrungen in Bezug auf Verkehrsstockungen entsprechend den im Stadtplan hinterlegten Informationen eine Abstellung des Dieselmotors zu bewirken. Dies kann auch mittels Telematik durch einen Verkehrsleitrechner erfolgen, welcher dabei noch weitere Informationen, wie insbesondere die Verkehrsdichte, auswerten kann.

Zur Wiederinbetriebnahme der Verbrennungskraftmaschine 6 ist der Steuereinrichtung 12 ein weiterer Eingang zugeordnet. Dieser ist hier mit 26 bezeichnet. Der Eingang 26 ist dabei mit einer Einrichtung zur Vorgabe eines Signals über eine Wiederinbetriebnahme der Verbrennungskraftmaschine 6 wenigstens mittelbar koppelbar. Da die Steuereinrichtung 12 Bestandteil einer Fahrsteuerung sein kann, kann daher dieser Eingang mit der Fahrsteuerung gekoppelt werden, wobei die Vorgabe des Wunsches nach dem Wiederanfahren über eine Betätigungseinrichtung erfolgt, welche mit einem Eingang der Fahrsteuerung verbunden ist. Die Steuervorrichtung 11 kann jedoch auch Bestandteil der Fahrsteuerung sein. In diesem Fall ist der Eingang 26 der Steuervorrichtung selbst mit der Betätigungseinrichtung wenigstens mittelbar gekoppelt. In diesem Fall wird an einem weiteren zweiten Ausgang 27 der Steuervorrichtung ein Signal zur Ansteuerung der Schalteinrichtung 9 ausgegeben, welches bewirkt, daß die Energiespeichereinrichtung mit der elektrischen Kopplung in Form des Spannungszwischenkreises 8 verbunden wird. Über die Energiespeichereinrichtung 10 wird dann Energie in den Spannungszwischenkreis 8 eingespeist, welche zum Antrieb der im normalen Traktionsbetrieb als Generator betreibbaren elektrischen Maschine 5 genutzt wird. Dieser arbeitet in diesem Betriebszustand als Motor und treibt die Verbrennungskraftmaschine 6 an. Damit kann der Generator 5 als Starteinrichtung bei Inbetriebnahme der Verbrennungskraftmaschine genutzt werden.

Damit während des Anfahrvorganges der Anteil der über die Schalteinrichtung in den Zwischenkreis 8 eingespeisten Energie lediglich zum Anfahren der Verbrennungskraftmaschine 6 genutzt wird, sind entsprechende hier nicht dargestellte Einrichtungen im Zwischenkreis vorgesehen, die vorzugsweise während des Anfahrvorganges lediglich ein Einspeisen von Energie in den Generator 5 ermöglichen. Dies kann, wie bereits erwähnt durch zusätzliche Einrichtungen im Zwischenkreis 8 erfolgen oder aber durch entsprechende, hier im einzelnen nicht verdeutlichte Ansteuerung der einzelnen Wechselrichtereinheiten.

Die Ladung der Energiespeichereinrichtung 10, d.h. der Batterie, erfolgt aus dem Spannungszwischenkreis 8, mittels einer einfachen Chopperlösung zur Reduzierung der Zwischenkreisspannung U_{EK} auf die Ladespannung der Batterie U_{BATT}. Der Ladevorgang der Batterie kann dabei ebenfalls mittels der Steuervorrichtung 11 realisiert werden. Dazu weist diese Steuervorrichtung 11 einen weiteren Eingang 25 auf, welcher mit der Batterie gekoppelt ist und über welchen ein Signal in Bezug auf den Ladezustand der Batterie der Steuereinrichtung 12 zugeführt wird. Da der Ladevorgang vorzugsweise nur im Betriebszustand "Bremsen" möglich sein soll, ist es des weiteren erforderlich, ein Signal für den Betriebszustand "Bremsen" an der Steuereinrichtung 12 zu verarbeiten. Als dieses Signal kann beispielsweise das am Eingang 15 anliegende Signal gewertet werden. In der Steuereinrichtung 12 sind Mittel vorgesehen, welche in Bezug auf den Ladezustand der Batterie entscheiden, ob die mittels der als Generator betreibbaren Elektromaschine erzeugte Bremsenergie der Batterie zuzuführen ist. Dieses Mittel kann beispielsweise ein Differenzbildner sein, welcher die Abweichung eines aktuellen Ladezustandes von einem vorgebbaren Soll-Ladezustand ermittelt und bei Überschreitung einer bestimmten vorgebbaren Größe für die Abweichung am Ausgang ein Signal für die Zuspeisung der Bremsenergie zur Batterie ausgibt.

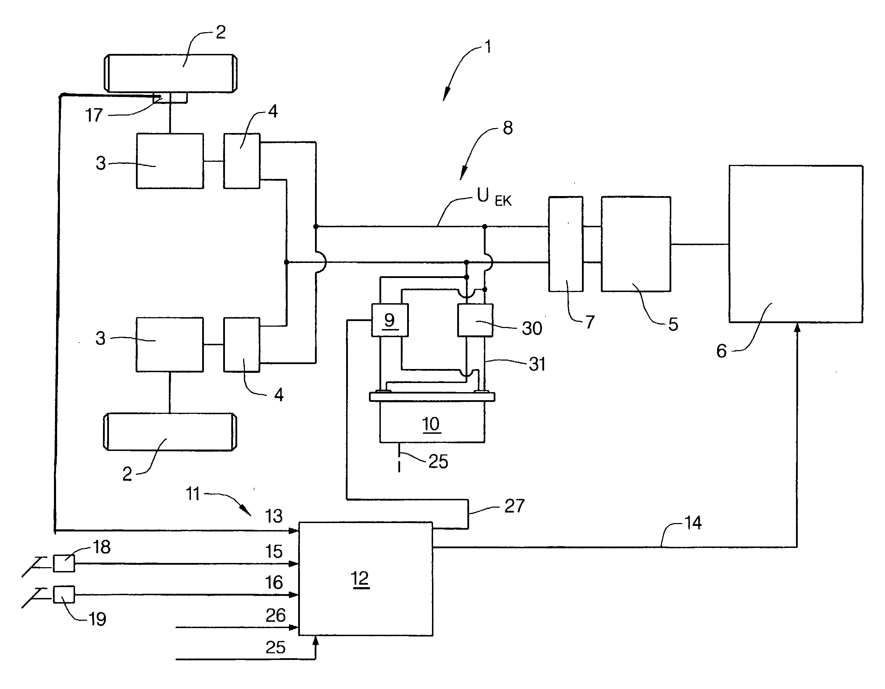

## Patentansprüche

1. Verfahren zur Kraftstoffreduzierung in einem Antriebssystem für Fahrzeuge, insbesondere Busse;
- mit mindestens einem, mit wenigstens einem Antriebsrad (2) wenigstens mittelbar koppelbaren Elektromotor (3);
- mit einer mechanisch mit einer Verbrennungskraftmaschine (6) koppelbaren und im Traktionsbetrieb als Generator betreibbaren elektrischen Maschine (5); wobei
- die Elektromotoren (3) elektrisch mit der als Generator betreibbaren elektrischen Maschine (5) gekoppelt sind;
- mit einer, der elektrischen Kopplung zugeordneten Energiespeichereinrichtung (10);
bei welchem wenigstens eine, den Bewegungszustand des Fahrzeuges wenigstens mittelbar charakterisierende Größe und/oder eine, einen beabsichtigten folgenden Fahrzeugstillstand anzeigenden Größe fortlaufend ermittelt werden;
bei welchem die den aktuellen Fahrzustand wenigstens mittelbar charakterisierende Größe im Hinblick auf ihren Einfluß für den nachfolgenden Fahrzustand in einer Steuereinrichtung (12) ausgewertet wird;
bei welchem bei Vorliegen einer, einen folgenden Fahrzeugstillstand anzeigenden Größe und/oder bei Vorliegen eines auf einen Fahrzeugstillstand hinweisenden Auswertungsergebnisses für die, den aktuellen Fahrzustand charakterisierende Größe
die Verbrennungskraftmaschine (6) außer Betrieb genommen wird und bei Vorliegen eines Signales für ein gewünschtes Wiederanfahren die Verbrennungskraftmaschine (6) durch Kopplung der im Traktionsbetrieb als Generator betreibbaren Maschine (5) mit der Energiespeichereinrichtung (10) über diesen gestartet wird.

2. Verfahren nach Anspruch 1, **gekennzeichnet durch** folgende Merkmale:
bei welchem während eines den Fahrzeugstillstand einleitenden Bremsvorganges die Elektromotoren (3) generatorisch betrieben werden;
bei welchen die **durch** den generatorischen Betrieb der Elektromotoren (3) in die elektrische Kopplung eingeleitete elektrische Leistung zum Antrieb des Generators genutzt wird;
bei welchem die Lenkhilfepumpe als Nebenaggregat über den Generator angetrieben wird.

3. Antriebssystem für Fahrzeuge, insbesondere Busse, zur Durchführung des Verfahrens gemäß Ansprüche 1 oder 2;
mit einer Verbrennungskraftmaschine (6);
mit einer mechanisch mit der Verbrennungskraftmaschine (6) koppelbaren, im Traktionsbetrieb als Generator betreibbaren elektrischen Maschine (5); mit wenigstens einem, wenigstens mittelbar mit einem Antriebsrad koppelbaren, Elektromotor (3); wobei
jeder Elektromotor (3) elektrisch mit der als Generator betreibbaren elektrischen Maschine (5) gekoppelt ist, **dadurch gekennzeichnet, daß** eine der elektrischen Kopplung zugeordnete Energiespeichereinrichtung (10) zum "Starten" der Verbrennungskraftmaschine (6) über den Generator vorgesehen ist, daß Mittel zur Außerbetriebnahme der Verbrennungskraftmaschine (6) bei beabsichtigtem Fahrzeugstillstand vorgesehen sind, und daß Mittel zur Kopplung der Energiespeichereinrichtung (10) mit einer Spannung U_{BATT}, niedrieger als der in der elektrischen Kopplung anliegenden Spannung U_{EK}, zum Starten der Verbrennungskraftmaschine (6) nach dem Stillstand mit der elektrischen Kopplung zwischen den Elektromotoren (3) und der als Generator im Traktionsbetrieb betreibbaren elektrischen Maschine (5) und zur Unterbrechung der Verbindung zwischen Energiespeichereinrichtung (10) und elektrischer Kopplung nach Beendigung des Startvorganges vorgesehen sind

4. Antriebssystem nach Anspruch 3, **gekennzeichnet durch** die folgenden Merkmale:
jedem Elektromotor (3) ist wenigstens eine erste elektrische Wechselrichtereinheit (4) und der als Generator betreibbare Maschine eine weitere zweite Wechselrichtereinheit (7) zugeordnet;
die elektrische Kopplung erfolgt **durch** die Verbindung der Wechselrichtereinheiten (4, 7) über einen Spannungszwischenkreis (8).

5. Antriebssystem nach einem der Ansprüche 3 oder 4, **gekennzeichnet durch** die folgenden Merkmale:
mit einer Steuervorrichtung umfassend mindestens eine Steuereinrichtung (12);
wenigstens einer am Fahrzeug angebrachten Überwachungs- bzw. Erfassungseinrichtung (18, 19) zur fortlaufenden Ermittlung einer den Fahrzustand- bzw. den aktuellen Bewegungszustand wenigstens mittelbar charakterisierenden Größe;
die Steuereinrichtung weist wenigstens einen Eingang (13, 15, 16, 25, 26) und zwei (27, 14) Ausgang auf;
der Eingang ist mit der Überwachungs- bzw. Erfassungseinrichtung (18, 19) koppelbar;
der Ausgang (27) der Steuereinrichtung (12) ist mit dem Leistungsstellglied der Verbrennungskraftmaschine (6) gekoppelt;
die Steuereinrichtung (12) umfaßt eine Auswerteinrichtung, welche die an den Eingängen anliegenden Signale von den Überwachungs- bzw. Erfassungseinrichtungen im Hinblick auf einen nachfolgenden beabsichtigten Fahrzeugstillstand auswertet;
die Auswerteinrichtung bildet bei Voliegen eines Auswertergebnisses im Hinblick auf einen folgenden Fahrzeugstillstand eine Stellgröße zur Außerbetriebnahme der Verbrennungskraftmaschine (6), welche dem Ausgang (14) der Steuereinrichtung (12) zugeführt wird;
der zweite Ausgang (27) ist mit einer Schalteinrichtung (3) zur Kopplung der Energiespeichereinrichtung mit der elektrischen Kopplung und Unterbrechung nach dem Stillstand des Fahrzeuges verbindbar.

6. Antriebssystem nach Anspruch 5, **dadurch gekennzeichnet, daß** eine erste Überwachungs- bzw. Erfassungseinrichtung die aktuelle Fahrgeschwindigkeit ermittelt.

7. Antriebssystem nach einem der Ansprüche 5 oder 6, **gekennzeichnet durch** das folgendene Merkmal:
eine zweite Überwachungs- bzw. Erfassungseinrichtung (13) ist einem Betätigungsorgan zur Vorgabe eines bestimmten Leistungswunsches zugeordnet (Gaspedal oder Gashebel);
eine weitere dritte Überwachungs- bzw. Erfassungseinrichtung (18) ist einem Betätigungsorgan für die Verringerung der Fahrgeschwindigkeit zugeordnet (Bremspedal);
die zweite Überwachungs- bzw. Erfassungseinrichtung mißt die Geschwindigkeit der Freigabe des Betätigungsorganes für einen Leistungswunsch an der Verbrennungskraftmaschine (6);
die dritte Überwachungs- bzw. Erfassungseinrichtung ermittelt die Intensität der Betätigung des Organs zur Verringerung der Fahrgeschwindigkeit.

8. Antriebssystem nach einem der Ansprüche 5 bis 7, **dadurch gekennzeichnet, daß** die Überwachungs- bzw. Erfassungseinrichtung dem Betätigungsmechanismus der Türen des Fahrzeuges zugeordnet ist.

9. Antriebssystem nach einem der Ansprüche 5 bis 8, **gekennzeichnet durch** die folgenden Merkmale:
eine fünfte Überwachungs- bzw. Erfassungseinrichtung ist einem Verkehrsleitsystem zugeordnet;
die Überwachungs- bzw. Erfassungseinrichtung mißt die Verkehrsdichte;
die Steuereinrichtung umfaßt einen elektronischen Stadtplan, welcher wenigstens dem Umfang des Verkehrsleitsystems entspricht.

10. Antriebssystem nach einem der Ansprüche 3 bis 9, **gekennzeichnet durch** die folgenden Merkmale:
die Mittel zur wahlweisen Kopplung der Energiespeichereinrichtung (10) mit der elektrischen Kopplung umfassen eine mittels einer Steuereinrichtung ansteuerbare Schalteinrichtung.

11. Antriebssystem nach Anspruch 10, **dadurch gekennzeichnet, daß** die Steuereinrichtung von der Steuereinrichtung zur Ansteuerung des Leistungstellgliedes der Verbrennungskraftmaschine (6) gebildet wird.

12. Antriebssystem nach Anpruch 11, **dadurch gekennzeichnet, daß** die Steuereinrichtung Bestandteil einer zentralen Fahrsteuerung ist.

13. Antriebssystem nach Anspruch 10 oder 11, **dadurch gekennzeichnet, daß** die Steuereinrichtung einer zentralen Fahrsteuerung untergeordnet ist.

14. Antriebssystem nach einem der Ansprüche 3 -13, **dadurch gekennzeichnet, daß** weitere Mittel zur Aufladung der Energiespeichereinrichtung (10) während des Fahrvorganges und/oder eines Bremsvorganges aus der elektrischen Kopplung vorgesehen sind.

## Claims

1. A method for reducing the fuel in a drive system for vehicles, especially motorbuses;
- with at least one electric motor (3) which can be coupled at least indirectly with at least one driving wheel (2);
- with an electric machine (5) which can be coupled mechanically with a combustion engine (6) and can be operated in traction operation as a generator;
- with the electric motors (3) being coupled electrically with the electric machine (5) which can be operated as a generator;
- with an energy storing device (10) which is associated with the electric coupling;
wherein at least one variable which characterizes the motion state of the vehicle in an at least indirect fashion and/or a variable indicated an intended subsequent standstill of the vehicle are determined in a continuous manner;
wherein the variable which characterizes the current state of the vehicle at least indirectly is evaluated in a control device (12) with respect to its influence for the subsequent state of the vehicle;
wherein in the case of the presence of a variable indicating a subsequent standstill of the vehicle and/or in the case of the presence of an evaluation result indicating a standstill of the vehicle for the variable **characterizing** the current state of the vehicle the combustion engine (6) is put out of operation and in the case of the presence of a signal for a desired renewed starting the combustion engine(6) is started by coupling the machine (5) with the energy storage device (10), which machine is operated in traction operation as a generator.

2. A method as claimed in claim 1, **characterized by** the following features:
wherein during a braking process initiating the vehicle standstill the electric motors (3) are operated in a generating fashion;
wherein the electric power introduced into the electric coupling by the generating operation of the electric motors (3) is used for driving the generator;
wherein the steering booster pump is driven as an auxiliary unit via the generator.

3. A drive system for vehicles, especially motorbuses, for performing the method according to claims 1 or 2;
with a combustion engine (6);
- with an electric machine (5) which can be coupled mechanically with a combustion engine (6) and can be operated in traction operation as a generator;
- with at least one electric motor (3) which can be coupled at least indirectly with a driving wheel;
- with each electric motor being coupled electrically with the electric machine (5) which can be operated as a generator;
**characterized in that** an energy storage device (10) for "starting" the combustion engine (6) via the generator is provided, which storage device is associated with the electric coupling, that means are provided for putting the combustion engine (6) out of operation in the case of intended standstill of the vehicle, and that means are provided for coupling the energy storage device (10) with a voltage U_{BATT}, which is lower than the voltage U_{EK} applied in the electric coupling, for starting the combustion engine (6) after the standstill with the electric coupling between the electric motors (3) and the electric machine (5) which can be operated as generator in traction operation and for interrupting the connection between the energy storage device (10) and the electric coupling after ending the starting process.

4. A drive system as claimed in claim 3, **characterized by** the following features:
- each electric motor (3) is associated with at least one first electric current inverter unit (4) and the machine which can be operated as a generator is associated with a further second current inverter unit (7);
- the electric coupling occurs by connecting the current inverter units (4, 7) via a voltage link (8).

5. A drive system as claimed in one of the claims 3 or 4, **characterized by** the following features:
- with a control apparatus comprising at least one control device (2);
- with at least one monitoring or detection device (18, 15) attached to the vehicle for the purpose of continual determination of a variable which is at least indirectly characteristic of the vehicle state or current motion state;
- with the control device comprising at least one input (13, 15, 16, 25, 26) and two output (27, 14);
- with the input being capable of being coupled with the monitoring or detection device (18, 15);
- with the output (27) of the control device (12) being coupled with the power controller unit of the combustion engine (6);
- with the control device (12) comprising an evaluation device which evaluates the signals from the monitoring or detection devices as applied to the inputs with respect to a subsequently intended vehicle standstill;
- with the evaluation device, when an evaluation result is present with respect to a subsequent vehicle standstill, forming a correcting variable for putting out of operation the combustion engine (6), which correcting variable is supplied to the output (14) of the control device (12);
- with the second output (27) being capable of being coupled with a switching device (3) for coupling the energy storing device with the electric coupling and for interrupting after the standstill of the vehicle.

6. A drive system as claimed in claim 5, **characterized in that** a first monitoring or detection device determines the current driving speed.

7. A drive system as claimed in one of the claims 5 or 6, **characterized by** the following features:
- a second monitoring or detection device (13) is associated with an actuator for predetermining a certain desired output (accelerator or gas pedal);
- a further third monitoring or detection device (18) is associated with an actuator for reducing the driving speed (brake pedal);
- the second monitoring or detection device measures the speed of the release of the actuator for a desired output to the combustion engine (6);
- the third monitoring or detection device determines the intensity of the actuation of the actuator for reducing the driving speed.

8. A drive system as claimed in one of the claims 5 to 7, **characterized in that** the monitoring or detection device is associated with the actuating mechanism of the doors of the vehicle.

9. A drive system as claimed in one of the claims 5 to 8, **characterized by** the following features:
- a fifth monitoring or detection device is associated with a traffic routing system;
- the monitoring or detection device measure the traffic density;
- the control device comprises an electronic city map which corresponds at least to the range of the traffic routing system.

10. A drive system as claimed in one of the claims 3 to 9, **characterized by** the following features:
- the means for the optional coupling of the energy storing device (10) with the electric coupling comprise a switching device which can be triggered by means of a control device.

11. A drive system as claimed in claim 10, **characterized in that** the control device is formed by the control device for triggering the power controller unit of the combustion engine (6).

12. A drive system as claimed in claim 11, **characterized in that** the control device is a component of a central driving control.

13. A drive system as claimed in claim 10 or 11, **characterized in that** the control device is subordinate to a central driving control.

14. A drive system as claimed in one of the claims 3 to 13, **characterized in that** further means for charging the energy storage device (10) from the electric coupling during the driving process and/or braking process are provided.

## Revendications

1. Procédé pour diminuer la consommation de carburant dans un système d'entraînement pour véhicules, en particulier des autobus ;
- avec au moins un moteur électrique (3) pouvant s'accoupler au moins indirectement avec au moins une roue motrice (2) ;
- avec une machine électrique (5) apte à être couplée mécaniquement avec un moteur à combustion interne (6) et à être actionnée en générateur en mode de traction ; où
- les moteurs électriques (3) sont couplés électriquement avec la machine électrique (5) pouvant être actionnée en générateur ;
- avec un dispositif de stockage d'énergie affecté au couplage électrique (10) ;
où l'on détermine au moins une grandeur caractérisant au moins indirectement l'état de mouvement du véhicule et/ou une grandeur indiquant de manière continue un état de repos ultérieur recherché pour le véhicule ;
où l'on évalue dans un dispositif de commande (12) la grandeur caractérisant au moins indirectement l'état de marche réel, eu égard à son influence pour l'état de marche suivant ;
par lequel, en présence d'une grandeur annonçant un état de repos ultérieur du véhicule et/ou en présence d'un résultat d'évaluation indiquant un état de repos du véhicule pour la grandeur caractérisant l'état de marche réel,
on déconnecte le moteur à combustion interne (6) et, en présence d'un signal pour un redémarrage souhaité, on fait démarrer le moteur à combustion interne (6) par couplage de la machine actionnée en générateur (5) en mode de traction avec le dispositif de stockage d'énergie (10) par l'intermédiaire de ce dernier.

2. Procédé selon la revendication 1, **caractérisé par** les dispositions suivantes :
où les moteurs électriques (3) sont actionnés en générateur pendant un processus de freinage amorçant l'état de repos du véhicule ;
où la puissance électrique introduite dans le couplage électrique par l'intermédiaire des moteurs électriques actionnés en générateur (3) est utilisée pour entraîner le générateur ;
dans lequel la pompe d'assistance de direction est entraînée via le générateur en tant qu'unité auxiliaire.

3. Système d'entraînement pour véhicules, en particulier pour des autobus, destiné à la mise en oeuvre du procédé selon les revendications 1 ou 2 ;
avec un moteur à combustion interne (6) ;
avec une machine électrique (5) pouvant être actionnée en générateur en mode de traction, apte à être accouplée mécaniquement avec le moteur à combustion interne (6) ;
avec au moins un moteur électrique (3) apte à être accouplé au moins indirectement avec une roue motrice ; dans lequel
chaque moteur électrique (3) est couplé électriquement avec la machine électrique pouvant être actionnée en générateur, **caractérisé en ce qu'**un dispositif de stockage d'énergie (10) affecté au couplage électrique est prévu pour « lancer » le moteur à combustion interne (10) via le générateur, **en ce que** des moyens destinés à mettre hors de prise le moteur à combustion interne (6) sont prévus pour un état de repos recherché du véhicule et **en ce qu'**il est prévu des moyens destinés à coupler le dispositif de stockage d'énergie (10) sous une tension U_{BATT} inférieure à la tension U_{EK} présente dans le couplage électrique, à "lancer" le moteur à combustion interne (6) après l'état de repos avec le couplage électrique entre les moteurs électriques (3) et la machine électrique (5) pouvant être actionnée en générateur en mode de traction, et à interrompre la liaison entre dispositif de stockage d'énergie (10) et couplage électrique à la fin du processus de démarrage.

4. Système d'entraînement selon la revendication 3,
**caractérisé par** les dispositions suivantes :
- on affecte à chaque moteur électrique (3), au moins une première unité d'onduleur électrique (4) et à la machine pouvant être actionnée en générateur, une deuxième unité d'onduleur électrique (7) complémentaire ;
- le couplage électrique est réalisé par liaison des unités d'onduleurs (4,7) par l'intermédiaire d'un circuit intermédiaire de tension.

5. Système d'entraînement selon l'une des revendications 3 ou 4, **caractérisé par** les dispositions suivantes :
avec un dispositif de commande comportant au moins un organe de commande (12) ;
avec au moins un dispositif de surveillance et de détection (18, 19) placé sur le véhicule, destiné à déterminer de manière continue une grandeur caractérisant au moins indirectement l'état de marche
ou de mouvement réel;
l'organe de commande présente au moins une entrée (13, 15, 16, 25, 26) et deux sorties (27, 14) ;
l'entrée peut être couplée avec le dispositif de surveillance et de détection (18, 19) ;
la sortie (27) de l'organe de commande (12) est couplée avec l'organe de réglage de puissance du moteur à combustion interne (6) ;
l'organe de commande (12) comprend un dispositif d'évaluation qui évalue les signaux présents aux sorties des dispositifs de surveillance et de détection eu égard à un état de repos ultérieur souhaité pour le véhicule ;
le dispositif d'évaluation forme en présence d'un résultat d'évaluation eu égard à un état ultérieur de repos du véhicule, une grandeur de réglage pour mettre hors de prise le moteur à combustion interne (6) qui est amené à la sortie (14) de l'organe de commande (12) ;
la deuxième sortie (27) peut être reliée à un organe de commutation (3) pour couplage du dispositif de stockage d'énergie avec le couplage électrique et interruption après l'arrêt du véhicule.

6. Système d'entraînement selon la revendication 5, **caractérisé en ce qu'**un premier dispositif de surveillance et de détection détermine la vitesse réelle de marche.

7. Système d'entraînement selon l'une des revendications 5 ou 6, **caractérisé par** la disposition suivante :
un deuxième dispositif de surveillance et de détection (19) est affecté à un organe de manoeuvre destiné à notifier un souhait de puissance déterminé (accélérateur ou pédale des gaz) ;
un troisième dispositif supplémentaire de surveillance et de détection (18) est affecté à un organe de manoeuvre pour la réduction de la vitesse de marche (pédale de frein) ;
le deuxième dispositif de surveillance et de détection mesure sur le moteur à combustion interne (6) la vitesse à laquelle est libéré l'organe de commande pour un souhait de puissance;
le troisième dispositif de surveillance et de détection détermine l'intensité avec laquelle est actionné l'organe destiné à réduire la vitesse du véhicule.

8. Système d'entraînement selon l'une des revendications 5 à 7, **caractérisé en ce que** le dispositif de surveillance et de détection est affecté au mécanisme d'actionnement des portières du véhicule.

9. Système d'entraînement selon l'une des revendications 5 à 8, **caractérisé par** les dispositions suivantes :
un cinquième dispositif de surveillance et de détection est affecté à un système de gestion du trafic ;
le dispositif de surveillance et de détection mesure la densité du trafic ;
l'organe de commande comprend un plan de ville électronique qui correspond au moins au périmètre couvert par le système de gestion du trafic.

10. Système d'entraînement selon l'une des revendications 3 à 9, **caractérisé par** les dispositions suivantes :
les moyens de couplage, au choix, du dispositif de stockage d'énergie (10) avec le couplage électrique comprennent un organe de commutation pouvant être amorcé au moyen d'un organe de commande.

11. Système d'entraînement selon la revendication 10, **caractérisé en ce que** l'organe de commande est formé par l'organe de commande destiné à activer la commande de l'organe de réglage de puissance du moteur à combustion interne (6) .

12. Système d'entraînement selon la revendication 11, **caractérisé en ce que** l'organe de commande est un élément constitutif d'une commande centrale de marche.

13. Système d'entraînement selon la revendication 10 ou 11, **caractérisé en ce que** l'organe de commande est subordonné à une commande centrale de marche.

14. Système d'entraînement selon l'une des revendications 3 à 13, **caractérisé en ce que** d'autres moyens destinés à alimenter le dispositif de stockage d'énergie (10) pendant le processus de marche et/ou un processus de freinage, sont prévus à partir du couplage électrique.
